# EUROPÄISCHE PATENTSCHRIFT

(11) **EP 0 675 289 B1**
(45) Veröffentlichungstag und Bekanntmachung des Hinweises auf die Patenterteilung: **19.12.2001**
(21) Anmeldenummer: 95103450.3
(22) Anmeldetag: 10.03.1995
(51) Int. Cl.: F04D 19/04, F04D 17/16

(54) **Reibungspumpe**
Friction pump
Pompe à friction

(30) Priorität: 26.03.1994 DE 4410656
(43) Veröffentlichungstag der Anmeldung: 04.10.1995
(73) Patentinhaber: Pfeiffer Vacuum GmbH, 35614 Asslar (DE)
(72) Erfinder: Conrad, Armin, D-35745 Herborn (DE); Lembke, Torbjörn, S-75426 Uppsala (SE)

(56) Entgegenhaltungen:
- EP-A- 0 378 163
- DE-A- 3 922 782
- DE-C- 912 007
- GB-A- 679 607
- GB-A- 2 189 295
- NL-A- 7 005 184
- US-A- 3 066 849

## Beschreibung

Die Erfindung betrifft eine Reibungspumpe nach dem Oberbegriff des 1. Patentanspruches.

Eine magnetische Lagerung bildet einen integrierten Bestandteil der Pumpe. Dabei dienen die für das Magnetlager charakteristischen Bauteile gleichzeitig als diejenigen, welche für die Funktion als Vakuumpumpe von Bedeutung sind.

Zur Förderung von Gasen sind Reibungspumpen der verschiedensten Bauart bekannt. Ihre Arbeitsweise beruht auf der Übertragung von Impulsen von bewegten Wänden auf die Gasteilchen. Auf diese Art wird eine Gasströmung in die gewünschte Richtung erzeugt. Reibungspumpen, welche in einem Druckbereich arbeiten, in dem die freie Weglänge der Gasmoleküle groß ist gegenüber den geometrischen Abmessungen der Pumpe, also im molekularen Strömungsgebiet, werden Molekularpumpen genannt.

Die erste Reibungspumpe dieser Art wurde von Gaede [1] vorgestellt. Eine technische Abwandlung der Gaedeschen Pumpe unter Beibehaltung des Grundprinzips ist eine Entwicklung von Siegbahn [2]. Hier wird als bewegte Wand eine drehende Scheibe benutzt. Eine weitere Variante einer Reibungspumpe wurde von Holweck [3] vorgestellt.

Bei dieser dient eine Zylinderoberfläche als bewegte Wand.

Siehe hierzu auch die Dokumente: NL-A-7005184, DE-A-3922782, GB-A-2189295 und DE-C-912007.

Einen großen Fortschritt in der Weiterentwicklung von Gasreibungspumpen stellt eine Konstruktion von Becker [4] dar. Hier sind bewegte und stehende Wände abwechselnd hintereinander angeordnet, wobei beide aus mit Schaufeln versehenen turbinenförmigen Scheiben bestehen. Daher wurde für sie auch der Name Turbomolekularpumpe eingeführt.

Diese Weiterentwicklungen der zuerst von Gaede vorgestellten Reibungspumpe spielen in der Vakuumtechnik, insbesondere in der Hoch- und Ultrahochvakuumtechnik eine immer bedeutendere Rolle. Dabei sind die Einsatzbereiche der Turbomolekularpumpe nach Becker auf der einen Seite und der Reibungspumpe nach Siegbahn und derjenigen nach Holweck auf der anderen Seite unterschiedlich. Die Turbomolekularpumpe ist durch ihren Aufbau aus vielen in Reihe geschalteten Stufen in der Lage, ein hohes Druckverhältnis zu liefern und so für den Einsatz im Hoch- und Ultrahochvakuumgebiet besonders geeignet. Ihr Einsatzgebiet ist jedoch nach höheren Drücken hin begrenzt, da sie aufgrund der großen Abstände der Pumpenteile nur bei niedrigen Drücken etwa < 10⁻¹ mbar voll wirksam ist. Die Reibungspumpen nach der Art von Siegbahn und derjenigen von Holweck sind für den Einsatz im nach oben anschließenden Druckbereich gut geeignet. Sie können sowohl separat in diesem Druckbereich verwendet werden, als auch in Reihe geschaltet mit einer Turbomolekularpumpe. Diese letzte Kombination von Turbomolekularpumpe und Reibungspumpe stellt eine elegante Möglichkeit dar, den Arbeitsbereich einer Turbomolekularpump nach höheren Ausstoßdrücken hin zu verschieben.

Wesentlich für die Funktion dieser Art Pumpen ist, daß der Abstand zwischen rotierenden und stehenden Bauteilen sehr gering ist, um Rückströmungs- und Rückförderungsverluste klein zu halten. Dies gilt insbesondere für die Reibungspumpen nach Siegbahn und Holweck. Dazu kommt, daß diese (wie auch die Turbomolekularpumpe) nur dann im höheren Druckbereich noch im molekularen Strömungsgebiet arbeiten, wenn die Abstände zwischen rotierenden und stehenden Bauteilen die Bedingung erfüllen, daß sie klein gegenüber der mittleren freien Weglänge der Moleküle des zu pumpenden Gases sind. Denn nur im molekularen Strömungsgebiet entwickeln die hier beschriebenen Pumpen ihr volles Druckverhältnis.

Allen diesen Pumpen ist gemeinsam, daß das Druckverhältnis exponentiell und das Saugvermögen linear von der Umfangsgeschwindigkeit der rotierenden Teile, welche als bewegte Wände dienen, abhängt. Daher ist es wesentlich für ein effektives Pumpverhalten, die Rotordrehzahl so weit anzuheben, wie es noch mit einem zuverlässigen Dauerbetrieb zu vereinbaren ist.

Dabei kommt der Rotorlagerung eine große Bedeutung zu. Neben der klassisch mechanischen Rotorlagerung in geschmierten Kugellagern werden heute Kombinationen von Permanentmagnetlagern und Kugellagern verwendet. Zur vollkommen berührungslosen Lagerung kommen aktiv gesteuerte Magnetlager verschiedenster Ausführungen zur Anwendung.

Die beiden extremen Erfordernisse, hohe Drehzahl und minimale Abstände, zwischen stehenden und rotierenden Teilen bedeuten für die Konstruktion einer Reibungspumpe zwei Bedingungen, die nur schwer miteinander zu vereinbaren sind. Je höher die Drehzahl ist, um so größer muß der minimale Abstand zwischen stehenden und rotierenden Teilen sein, um ein Anlaufen und somit eine Beschädigung oder gar Zerstörung der Pumpe zu vermeiden. Bei den Reibungspumpen nach Siegbahn und Holweck, bei denen die Spalte zur Erzielung eines effektiven Pumpverhaltens extrem eng sein müssen, spielen diese Kriterien eine ausgesprochen wichtige Rolle. Insbesondere die Einhaltung vorgegebener Spalte über lange Zeit während eines Dauerbetriebes bereitet große Schwierigkeiten.

Der Erfindung liegt die Aufgabe zugrunde, eine Reibungspumpe vorzustellen, welche unter den extremen Erfordernissen, wie sehr hohe Drehzahl und minimale Spalte, einen sicheren und zuverlässigen Dauerbetrieb gewährleistet unter Beibehaltung der hervorragenden vakuumtechnischen Eigenschaften, wie z.B. ölfreies Vakuum, welches solche Pumpen charakterisieren. Insbesondere soll das Problem der Einhaltung extrem enger Spalte über den Zeitraum eines Dauerbetriebes bei den Reibungspumpen nach Siegbahn und Holweck einer Lösung zugeführt werden.

Die Aufgabe wird durch die kennzeichnenden Merkmale des 1. Patentanspruches gelöst. Die Ansprüche 2 bis 12. stellen weitere Ausgestaltungen der Erfindung dar.

Durch die Entwicklung eines neuartigen Magnetlagers lassen sich die Schwierigkeiten, welche bei der Konstanthaltung sehr enger Spalte bei Reibungspumpen auftreten, in eleganter Weise lösen. Die Lösung ist deshalb elegant und einfach, weil die Grundbauelemente der Pumpe und des Magnetlagers die gleichen sind, d.h. die Bauteile erfüllen gleichzeitig die unterschiedlichen Erfordernisse, den Pumpeffekt einer Reibungspumpe zu bewirken und die Eigenschaften eines Magnetlagers zu besitzen.

Das Magnetlager ist ein selbstregelndes Lager und beruht auf dem Prinzip der Wirbelstrominduktion. Dabei besteht der regelnde Teil im Prinzip aus einem elektrisch leitenden dünnwandigen Bauelement, demgegenüber sich eine Anordnung von Permanentmagneten befindet. Wenn sich nun das elektrisch leitende dünnwandige Bauelement relativ zu den Permanentmagneten bewegt, werden in jenem Wirbelströme derart induziert, daß durch das daraus resultierende Magnetfeld abstoßende Kräfte zwischen dem elektrisch leitenden Bauelement und den Magneten erzeugt werden. Wenn sich das elektrisch leitende Bauelement und die Magnete nähern, nimmt die Größe der induzierten Ströme zu, und somit auch das daraus resultierende Magnetfeld. Dadurch werden die abstoßenden Kräfte, welche der Bewegung entgegenwirken, ebenfalls zunehmen. Zu einem entsprechenden Effekt kommt es, wenn sich elektrisch leitendes Bauelement und Permanentmagnete voneinander entfernen. Das elektrisch leitende Bauelement stellt somit einen Magneten mit variabler Magnetisierung dar. Auf diese Weise entsteht der Mechanismus der Selbstregelung.

Es ergeben sich verschiedene Möglichkeiten der geometrischen Anordnung von relativ zueinander bewegten Teilen. Neben dem Fall einer linearen Anordnung, woraus ein magnetisches Linearlager entstehen würde, welches für unsere Anwendungsfälle nicht interessant ist, gibt es zwei Möglichkeiten von rotationssymetrischen Anordnungen, welche für den Einsatz in Vakuumpumpen geeignet sind.

Das elektrisch leitende Bauelement kann als rotierende Scheibe ausgebildet sein. Auf beiden Seiten dieser Scheibe befindet sich eine Statoranordnung, welche mit Dauermagneten bestückt ist. Dies entspricht grundsätzlich dem Aufbau einer Reibungspumpe nach Siegbahn. Auch hier befindet sich eine rotierende Scheibe zwischen einer Statoranordnung.

Erfindungsgemäß werden die einzelnen Bauteile des Magnetlagers und der Reibungspumpe nach Siegbahn so ausgebildet und zusammengefügt, daß sie gleichzeitig die Eigenschaften eines Magnetlagers und die einer Reibungspumpe erfüllen. Das bedeutet, daß die dünnwandige rotierende Scheibe elektrisch gut leitend sein muß, damit sich die Induktionsströme ausbilden können. Das Material muß darüber hinaus von solcher Festigkeit sein, daß es den Belastungen, welche durch die für eine Reibungspumpe erforderlichen hohen Drehzahlen hervorgerufen werden, standhält. Die Statorbauteile müssen die Permanentmagnete aufnehmen und gleichzeitig zur Förderung des Gases mit spiralförmigen Rillen versehen sein. In Abwandlung dieser Bauweise können die Rillen auch auf der Rotorscheibe angebracht sein.

Das elektrisch leitende Bauelement kann auch als rotierender Hohlzylinder ausgebildet sein. Auf beiden Seiten der Hohlzylinderflächen befindet sich eine Statoranordnung, welche mit Dauermagneten bestückt ist. Dies entspricht grundsätzlich dem Aufbau einer Reibungspumpe nach Holweck. Auch hier befindet sich ein rotierender Zylinder zwischen einer Statoranordnung.

Wenn die gleichen Gedanken, wie bei dem oben beschriebenen Beispiel einer Reibungspumpe nach Siegbahn, angewandt werden, kommt man zu einer eleganten und einfachen Konstruktion einer magnetisch gelagerten Reibungspumpe nach Holweck. Auch hier gilt, daß die spiralförmigen Rillen sowohl auf den Statorteilen, als auch auf dem Rotor angebracht sein können.

Zwischen diesen beiden Konstruktionsarten, der rotierenden Scheibe und dem rotierenden Zylinder, kann das elektrisch leitende Bauelement jede kegelförmige oder sphärische Form annehmen. Eine entsprechende Konstruktion der übrigen Bauteile ergibt sich durch die oben angeführten Überlegungen.

Ebenso können beide Konstruktionsarten sowohl in ihrer Funktion als Lagerelemente oder als Pumpenelemente als auch in der Kombination in einer Pumpe gleichzeitig verwirklicht sein. In diesem Falle kann eine zusätzliche radiale (für die Siegbahn-Konstruktion) bzw. axiale Unterstützung (für die Holweck-Konstruktion) wegfallen.

Minimale Abstände zwischen rotierenden und stehenden Bauteilen, sowie möglichst hohe Umfangsgeschwindigkeiten sind Voraussetzungen, welche für den effektiven Betrieb sowohl des Magnetlagers als auch der Reibungspumpe erfüllt sein müssen.

Erfindungsgemäß ist es gelungen, eine Konstruktion zu erstellen, welche allen diesen extremen Erfordernissen gerecht wird. Somit kann eine magnetisch gelagerte Vakuumpumpe gebaut werden, bei welcher die wesentlichen Teile eines Magnetlagers auch gleichzeitig die wesentlichen Funktionen einer Vakuumpumpe erfüllen. Eine solche elegante und einfache Konstruktion erlaubt eine räumlich kompaktere, im Betrieb zuverlässigere und sicherere Bauweise als herkömmliche Konstruktionen. In baulicher Kombination mit Turbomolekularpumpen ergeben sich Vakuumpumpen, welche in einem weiten Druckbereich einsetzbar sind, und welche mit einfachen Vorpumpen (z.B. Membranpumpen) betrieben werden können.

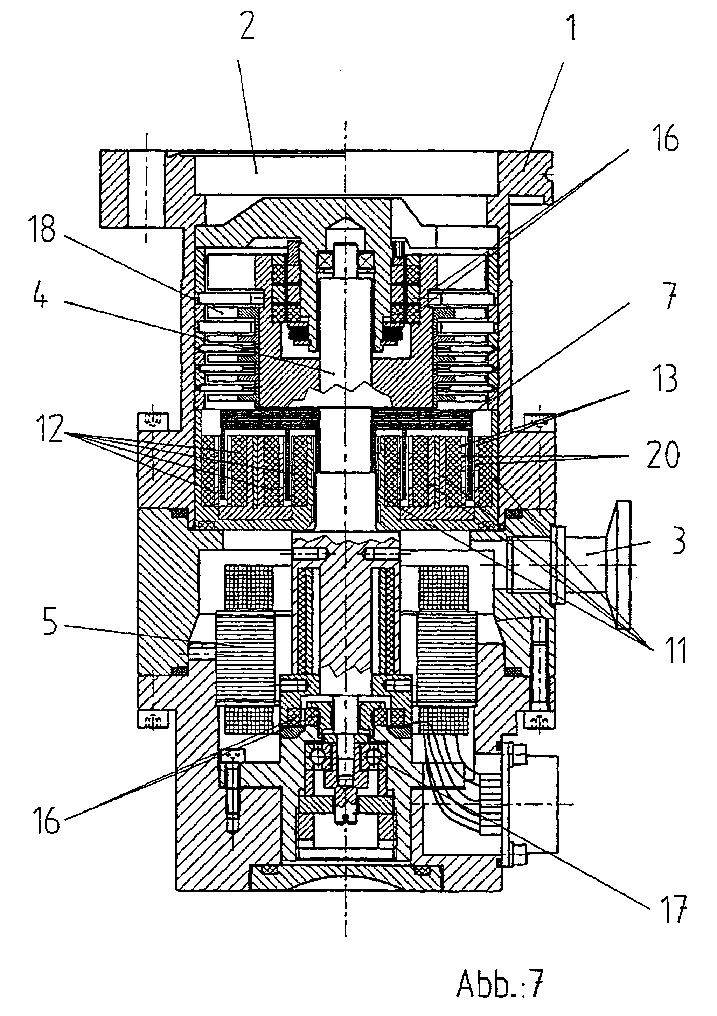

Die Erfindung soll anhand der Abbildungen 1 bis 7 näher erläutert werden.

Abb. 1 zeigt eine Reibungspumpe nach Siegbahn, die gleichzeitig als magnetisches Axiallager dient.

Abb. 2 zeigt einen vergrößerten Ausschnitt aus Abb. 1.

Abb.2a zeigt einen Querschnitt A-A' der Abb. 2.

Abb. 3 zeigt eine Reibungspumpe nach Holweck, die gleichzeitig als magnetisches Radiallager dient.

Abb. 4 zeigt einen vergrößerten Ausschnitt aus Abb. 3

Abb. 5 zeigt eine Ansicht der äußeren feststehenden Zylinderwand aus Abb. 3 und 4.

Abb. 6 zeigt die Kombination einer Reibungspumpe nach Siegbahn mit einer Turbomolekularpumpe.

Abb. 7 zeigt die Kombination einer Reibungspumpe nach Holweck mit einer Turbomolekularpumpe.

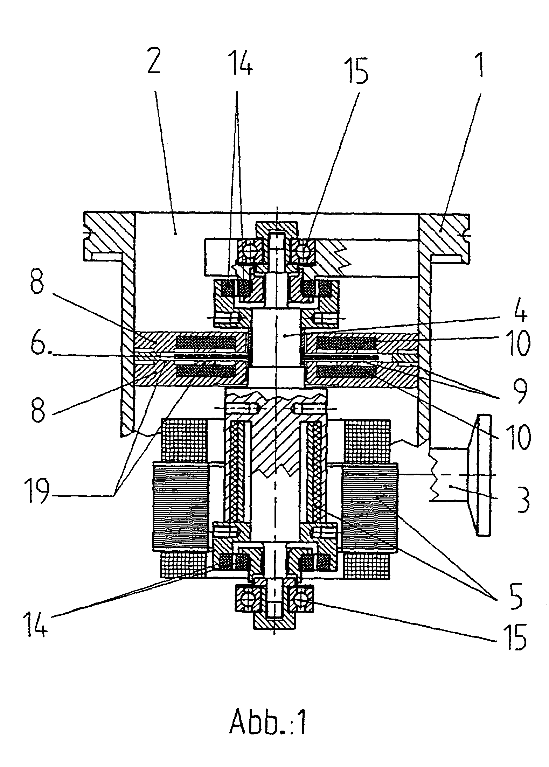

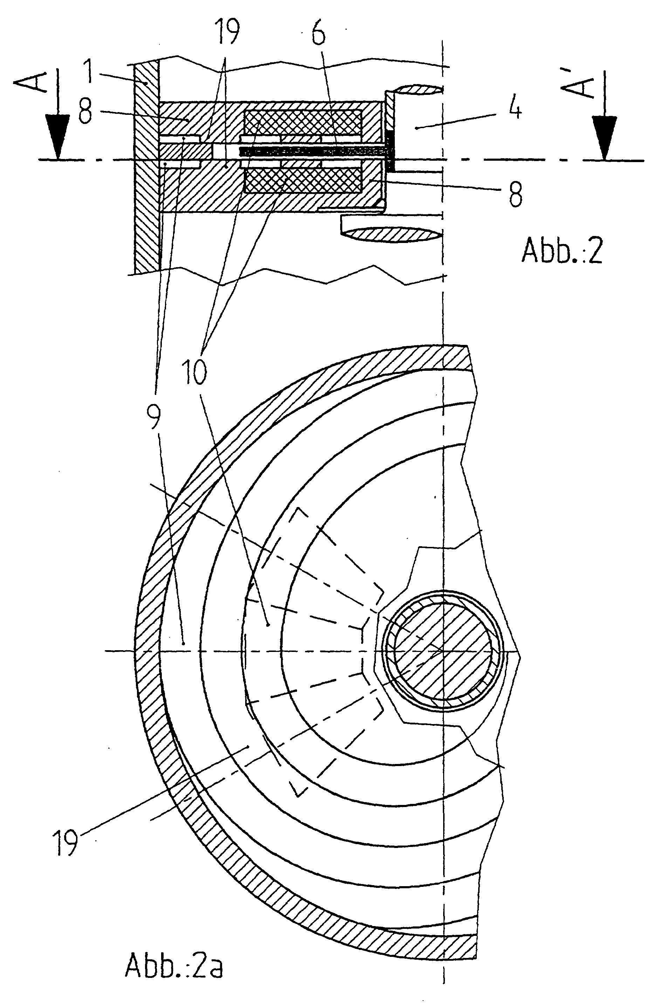

In Abb. 1 und 2 ist eine Reibungspumpe nach Siegbahn in einstufiger Ausführung dargestellt, deren charakteristischen Bauelemente gleichzeitig als Grundbauelemente einer magnetischen Axiallagerung mit Selbstregelung dienen. Im Pumpengehäuse 1 mit dem Ansaugflansch 2 und der Gasaustrittsöffnung 3 wird die Welle 4 durch die Motoranordnung 5 angetrieben. Auf der Welle ist eine flache Scheibe 6 aus elektrisch leitendem Material angebracht. Ihr gegenüber befinden sich beidseitig die Statorscheiben 8. Diese sind in ihrer Funktion als Pumpenelemente mit spiralförmigen Rillen 9, die durch Stege 19 getrennt sind, versehen. In den Rillen wird das Gas, welches durch die rotierende Scheibe 6 in Bewegung gesetzt wird, gefördert. In ihrer Funktion als Elemente des magnetischen Axiallagers sind die Statorscheiben 8 mit Permanentmagneten 10 versehen, welche unterhalb der Rillen 9 oder in den Stegen 19 angebracht sind. Die Permanentmagnete 10 induzieren in der rotierenden elektrisch leitenden Scheibe 6 Ströme, durch welche ein Magnetfeld erzeugt wird. Die daraus resultierenden Kräfte bewirken eine axiale Abstoßung zwischen rotierender Scheibe und Statorscheibe. Nähert sich die rotierende Scheibe einer der Statorscheiben, wird das Magnetfeld auf dieser Seite und damit die abstoßenden Kräfte verstärkt. Entsprechend vermindern sich die abstoßenden Kräfte bei Vergrößerung des Abstandes. Auf diese Weise ergibt sich eine Selbstregelung des magnetischen Axiallagers.

In radialer Richtung wird die Rotoranordnung in dem hier dargestellten Beispiel durch ein passives Permanentmagnetlager 14 stabilisiert. Die radiale Stabilisierung kann jedoch auch durch eine beliebige andere magnetische, elektromagnetische und/oder mechanische Anordnung erfolgen.

Da die induzierten Ströme und damit das Magnetfeld nur bei rotierender Scheibe 6 entstehen, ist das Lager bei Stillstand der Anordnung wirkungslos. Für diesen Fall sind Anlauflager 15 vorhanden, die die Rotoranordnung im Stillstand und bei Beginn der Rotation axial unterstützen. Diese Lager dienen im vorliegenden Beispiel gleichzeitig als Notlager für die Gesamtanordnung im Betrieb.

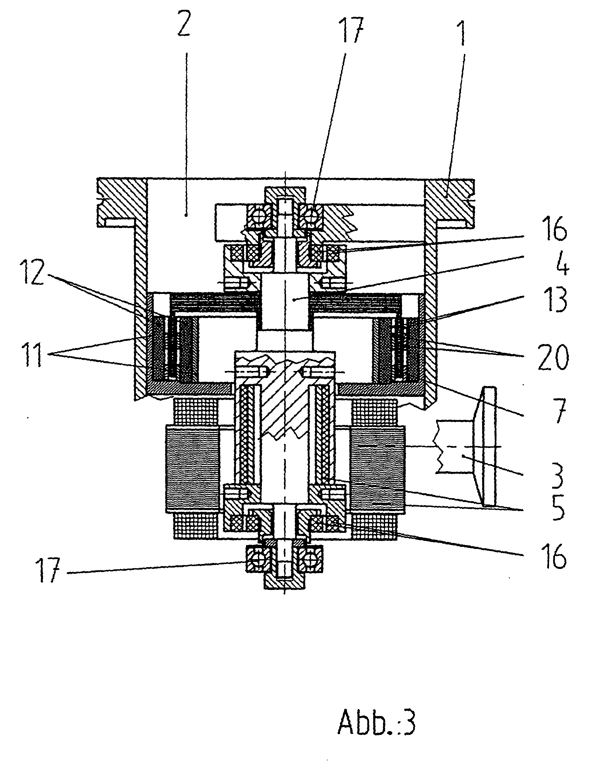

In Abb. 3, 4 und 5 ist eine Reibungspumpe nach Holweck in einstufiger Anordnung dargestellt, deren charakteristischen Bauelemente gleichzeitig als Grundbauelemente einer magnetischen Radiallagerung mit Selbstregelung dienen. Pumpengehäuse, Welle und Motoranordnung entsprechen der Darstellung in Abb. 1. Anstelle der flachen Scheibe ist auf der Welle 4 ein Hohlzylinder 7 aus elektrisch leitendem Material angebracht. Den Zylinderwänden gegenüber befinden sich beidseitig feststehende Zylinderwände 11. Diese sind in ihrer Funktion als Pumpenelemente mit spiralförmigen Rillen 13 und Stegen 20 versehen. In ihnen wird das Gas, welches durch den rotierenden Hohlzylinder 7 in Bewegung gesetzt wird, gefördert. In ihrer Funktion als Elemente des magnetischen Axiallagers sind die feststehenden Zylinderwände 11 mit Permanentmagneten 12 versehen, welche unterhalb der Rillen 13 oder in den Stegen 20 angebracht sind. Bei Rotation des Hohlzylinders tritt der gleiche Effekt der Abstoßung und der Selbstregelung ein, wie im ersten Beispiel beschrieben, mit dem Unterschied, daß die Kräfte jetzt in radialer Richtung wirken.

In axialer Richtung wird die Rotoranordnung durch ein passives Permanentmagnetlager 16 oder durch eine Lageranordnung mit gleicher Wirkung stabilisiert. Als Anlaufund Notlager sind in diesem Beispiel die Kugellager 17 vorgesehen. In Abwandlung der beiden beschriebenen Anordnungen, jedoch unter Beibehaltung der grundsätzlichen Funktionsweise, können die spiralförmigen Rillen und Stege auch auf den feststehenden Scheiben bzw. auf den feststehenden Zylinderwänden angebracht sein.

In den Abb. 1 bis 4 wurde die Erfindung am Beispiel von einstufigen Reibungspumpen dargestellt. Höhere Druckverhältnisse werden erreicht, wenn man mehrere Pumpstufen axial, bzw. radial hintereinander schaltet.

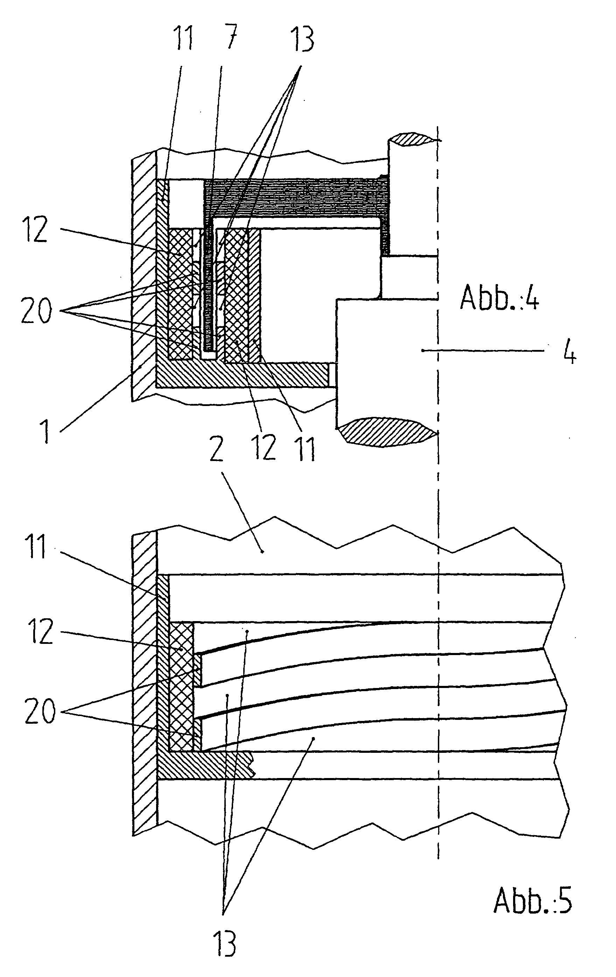

In Abb. 5 wird eine mehrstufige Reibungspumpe nach Siegbahn in Kombination mit einer Turbomolekularpumpe 18 gezeigt.

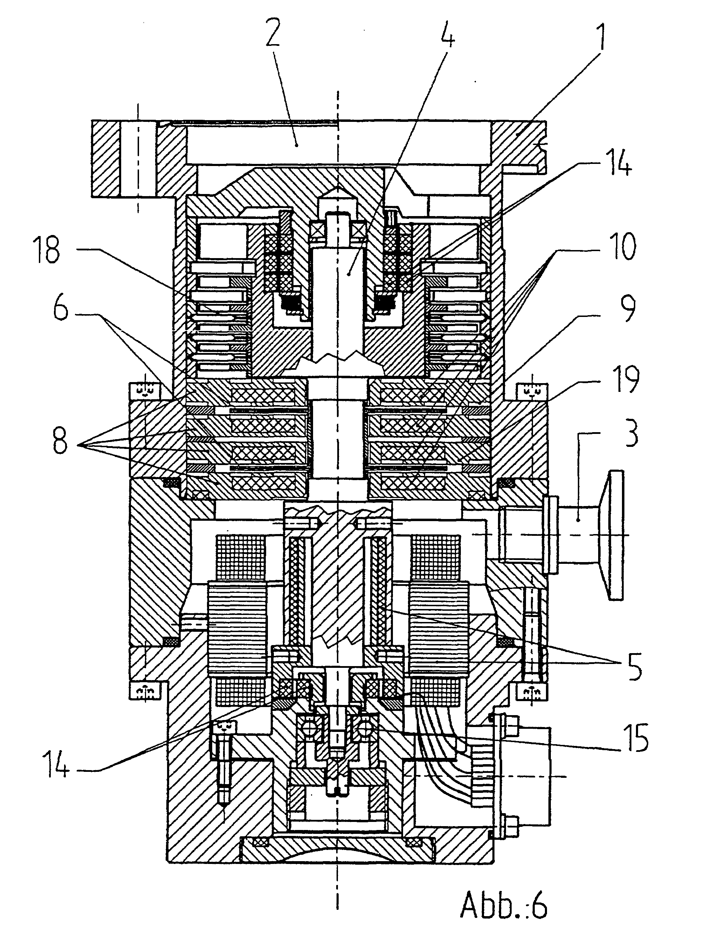

Abb. 6 zeigt die gleiche Anordnung mit einer mehrstufigen Reibungspumpe nach der Bauart von Holweck.

### Literatur:

[1] W. Gaede, Ann. Phys. 41 (1913) 337 ff.
[2] M. Siegbahn, Arch. Math. Ash. Fys. 30 B (1943
[3] F. Holweck, Comptes rendus Acad. Sience 177 (1923) 43 ff.
[4] W. Becker, Vakuum Technik 9/1o (1966)

## Patentansprüche

1. Reibungspumpe zur Förderung von Gasen nach der Bauart von Siegbahn mit mindestens einer Pumpstufe bestehend aus einer zwischen zwei feststehenden Scheiben (8) rotierenden Scheibe (6), wobei eine oder beide Seiten der rotierenden Scheibe, oder eine oder beide der der rotierenden Scheibe zugewandten Seiten der feststehenden Scheiben mit spiralförmigen Rillen (9) und Stegen (19) versehen sind, **dadurch gekennzeichnet, daß** die rotierende Scheibe (6) aus elektrisch leitendem Material besteht, und auf beiden Seiten der rotierenden Scheibe (6) sich Permanentmagnete (10) befinden, welche auf den feststehenden Scheiben (8) montiert sind, und diese Permanentmagnete (10) so angeordnet sind, daß sie entgegen gerichtete Wirbelströme in der rotierenden Scheibe (6) induzieren und diese Wirbelströme ein Magnetfeld erzeugen, welches eine in axialer Richtung stabilisierende Kraft auf den Rotor ausübt.

2. Reibungspumpe nach Anspruch 1 **dadurch gekennzeichnet, daß** die spiralförmigen Rillen (9) und Stege (19) an der Oberfläche der feststehenden Scheiben (8) angebracht sind und die Permanentmagnete (10) unter diesen montiert sind.

3. Reibungspumpe nach Anspruch 1 oder 2, **dadurch gekennzeichnet, daß** die Permanentmagnete (10) innerhalb der Stege (19) angebracht sind.

4. Reibungspumpe nach einem der vorhergehenden Ansprüche, **dadurch gekennzeichnet, daß** der Rotor durch eine Anordnung von Dauermagneten (14) in radialer Richtung stabilisiert ist.

5. Reibungspumpe nach einem der vorhergehenden Ansprüche **dadurch gekennzeichnet, daß** mindestens ein mechanisches Lager (15) vorhanden ist, welches den Rotor vor oder kurz nach dem Start in axialer Richtung stabilisiert.

6. Reibungspumpe zur Förderung von Gasen nach der Bauart von Holweck mit mindestens einer Pumpstufe, bestehend aus einem zwischen zwei feststehenden Zylinderwänden (11) rotierenden Hohlzylinder (7), wobei eine oder beide Seiten des rotierenden Hohlzylinders oder eine oder beide der dem rotierenden Zylinder zugewandten feststehenden Zylinderwände (11) mit spiralförmigen Rillen (13) und Stegen (20) versehen sind, **dadurch gekennzeichnet, daß** der rotierende Hohlzylinder (7) aus elektrisch leitendem Material besteht und auf beiden Seiten des Hohlzylinders sich Permanentmagnete (12) befinden, welche auf den feststehenden Zylinderwänden (11) montiert sind, und diese Permanentmagnete (12) so angebracht sind, daß sie entgegengesetzte Wirbelströme in dem rotierenden Hohlzylinder (7) induzieren und diese Wirbelströme ein Magnetfeld erzeugen, welches eine in radialer Richtung stabilisierende Kraft auf den Rotor ausübt.

7. Reibungspumpe nach Anspruch 6 **dadurch gekennzeichnet, daß** die spiralförmigen Rillen (13) an der Oberfläche der feststehenden Zylinderwände (11) angebracht sind und die Permanentmagnete (12) unter diesen montiert sind.

8. Reibungspumpe nach Anspruch 6 oder 7, **dadurch gekennzeichnet, daß** die Permanentmagnete (12) innerhalb der Stege (20) angebracht sind.

9. Reibungspumpe nach einem der Ansprüche 6 bis 8, **dadurch gekennzeichnet, daß** der Rotor durch eine Anordnung von Dauermagneten (16) in axialer Richtung stabilisiert wird.

10. Reibungspumpe nach einem der Ansprüche 6 bis 9, **dadurch gekennzeichnet, daß** mindestens ein mechanisches Lager (17) vorhanden ist, welches den Rotor vor und kurz nach dem Start in axialer Richtung stabilisiert.

11. Reibungspumpe nach einem der vorhergehenden Ansprüche, **dadurch gekennzeichnet, daß** anstelle der rotierenden Scheibe oder des rotierenden Hohlzylinders ein kegelförmiges Bauelement oder ein Bauelement in sphärischer Form vorhanden sit, und die beidseitig benachbarten Statorelemente entsprechend daran angepaßte Form aufweisen.

12. Reibungspumpe nach einem der vorhergehenden Ansprüche **dadurch gekennzeichnet, daß** sie so mit einer Turbomolekularpumpe (18) kombiniert ist, daß beide auf einer Welle montiert sind und die Reibungspumpe sich auf der Vorvakuumseite der Turbomolekularpumpe befindet.

## Claims

1. A friction pump of the Siegbahn type for displacing gases, incorporating at least one pumping stage consisting of a rotary disc (6) located between two fixed discs (8), whereby one or both faces of the rotary disc or one or both of the faces of the fixed discs facing the rotary disc are provided with spiral grooves (9) and ridges (19), **characterised in that** the rotary disc (6) consists of electrically conductive material, and permanent magnets (10) that are mounted on the fixed discs (8) are disposed on both sides of the rotary disc (6), these permanent magnets (10) being arranged in such a manner that they induce oppositely directed eddy currents in the rotary disc (6) and these eddy currents produce a magnetic field which exerts a stabilising force on the rotor in the axial direction.

2. A friction pump in accordance with Claim 1, **characterised in that** the spiral grooves (9) and ridges (19) are formed on the surfaces of the fixed discs (8), and the permanent magnets (10) are mounted beneath them.

3. A friction pump in accordance with Claim 1 or 2, **characterised in that** the permanent magnets (10) are installed within the ridges (19).

4. A friction pump in accordance with any of the preceding Claims, **characterised in that** the rotor is stabilised in the radial direction by an arrangement of permanent magnets (14).

5. A friction pump in accordance with any of the preceding Claims, **characterised in that** there is provided at least one mechanical bearing (15) which stabilises the rotor in the axial direction prior to or shortly after the starting process.

6. A friction pump of the Holweck type for displacing gases, incorporating at least one pumping stage consisting of a rotary hollow cylinder (7) located between two fixed cylinder walls (11), whereby one or both faces of the rotary hollow cylinder or one or both of the fixed cylinder walls (11) facing the rotary hollow cylinder are provided with spiral grooves (13) and ridges (20), **characterised in that** the rotary hollow cylinder (7) consists of electrically conductive material, and permanent magnets (12) that are mounted on the fixed cylinder walls (11) are disposed on both sides of the hollow cylinder, these permanent magnets (12) being installed in such a manner that they induce opposed eddy currents in the rotary hollow cylinder (7) and these eddy currents produce a magnetic field which exerts a stabilising force on the rotor in the radial direction.

7. A friction pump in accordance with Claim 6, **characterised in that** the spiral grooves (13) are formed on the surfaces of the fixed cylinder walls (11), and the permanent magnets (12) are mounted beneath them.

8. A friction pump in accordance with Claim 6 or 7, **characterised in that** the permanent magnets (12) are installed within the ridges (20).

9. A friction pump in accordance with any of the Claims 6 to 8, **characterised in that** the rotor is stabilised in the axial direction by an arrangement of permanent magnets (16).

10. A friction pump in accordance with any of the Claims 6 to 9, **characterised in that** there is provided at least one mechanical bearing (17) which stabilises the rotor in the axial direction prior to and shortly after the starting process.

11. A friction pump in accordance with any of the preceding Claims, **characterised in that** a ball-shaped component or a component of spherical shape is provided instead of the rotary disc or the rotary hollow cylinder, and the shapes of the adjacent stator elements on each side thereof are matched accordingly.

12. A friction pump in accordance with any of the preceding Claims, **characterised in that** it is combined with a turbo-molecular pump (18) in such a manner that both of them are mounted on one shaft and the friction pump is located on the backing pressure side of the turbo-molecular pump.

## Revendications

1. Pompe à friction de transport de gaz, à structure de Siegbahn, qui inclut au moins un étage de pompe qui se compose d'un disque tournant (6) entre deux disques fixes (8), dans laquelle l'un et/ou l'autre des côtés du disque tournant, ou l'un et/ou l'autre des cotés des disques fixes tournés vers le disque tournant comportent des rainures (9) et des nervures (19) de forme spirale, **caractérisée en ce que** le disque tournant (6) consiste en une matière électriquement conductrice et des aimants permanents (10) qui sont montés sur les disques fixes (8) se trouvent sur les deux côtés du disque tournant (6) et ces aimants permanents (10) sont agencés d'une manière telle qu'ils induisent des courants de Foucault d'orientations contraires dans le disque tournant (6) et que ces courants de Foucault engendrent un champ magnétique qui exerce sur le rotor une force stabilisante en direction axiale.

2. Pompe à friction selon la revendication 1, **caractérisée en ce que** les rainures (9) et les nervures (19) de forme spirale sont formées sur la surface des disques fixes (8) et les aimants permanents (10) sont montés au-dessous de ceux-ci.

3. Pompe à friction selon la revendication 1 ou 2, **caractérisée en ce que** les aimants permanents (10) sont montés à l'intérieur des nervures (19).

4. Pompe à friction selon l'une quelconque des revendications précédentes, **caractérisée en ce que** le rotor est stabilisé en direction radiale par un agencement d'aimants permanents (14).

5. Pompe à friction selon l'une quelconque des revendications précédentes, **caractérisée en ce qu'**elle comprend au moins un palier mécanique (15) qui stabilise le rotor en direction axiale avant ou peu après le démarrage.

6. Pompe à friction de transport de gaz, à structure de Holweck, qui comprend au moins un étage de pompe qui se compose d'un cylindre creux tournant (7) entre deux parois cylindriques fixes (11), dans laquelle l'un et/ou l'autre des côtés du cylindre creux tournant ou l'une et/ou l'autre des parois cylindriques fixes (11) tournées vers le cylindre tournant comporte des rainures (13) et des nervures (20) de forme spirale, **caractérisée en ce que** le cylindre creux tournant (7) consiste en une matière électriquement conductrice et des aimants permanents (12) qui sont montés sur les parois cylindriques fixes (11) se trouvent sur les deux côtés du cylindre creux et ces aimants permanents (12) sont montés d'une manière telle qu'ils induisent des courants de Foucault d'orientations contraires dans le cylindre creux tournant (7) et que ces courants de Foucault engendrent un champ magnétique qui exerce sur le rotor une force stabilisante en direction axiale.

7. Pompe à friction selon la revendication 6, **caractérisée en ce que** les rainures (13) et les nervures (20) de forme spirale sont formées sur la surface des parois cylindriques fixes (11) et les aimants permanents (12) sont montés au-dessous de celles-ci.

8. Pompe à friction selon la revendication 6 ou 7, **caractérisée en ce que** les aimants permanents (12) sont montés à l'intérieur des nervures (20).

9. Pompe à friction selon l'une quelconque des revendications 6 à 8, **caractérisée en ce que** le rotor est stabilisé en direction radiale par un agencement d'aimants permanents (16).

10. Pompe à friction selon l'une quelconque des revendications 6 à 9, **caractérisée en ce qu'**elle comprend au moins un palier mécanique (17) qui stabilise le rotor en direction axiale avant ou peu après le démarrage.

11. Pompe à friction selon l'une quelconque des revendications précédentes, **caractérisée en ce qu'**un composant conique ou un composant de forme sphérique est monté au lieu du disque tournant ou du cylindre creux tournant, et les éléments de stator voisins sur les deux côtés sont d'une forme adaptée de façon correspondante.

12. Pompe à friction selon l'une quelconque des revendications précédentes, **caractérisée en ce qu'**elle est combinée avec une pompe turbomoléculaire (18), d'une manière telle qu'elles sont toutes deux montées sur un arbre et que la pompe à friction se trouve sur le côté de vide primaire de la pompe turbomoléculaire.
